# EUROPÄISCHE PATENTSCHRIFT

(11) **EP 3 428 504 B1**
(45) Veröffentlichungstag und Bekanntmachung des Hinweises auf die Patenterteilung: **09.12.2020**
(21) Anmeldenummer: 18177973.7
(22) Anmeldetag: 15.06.2018
(51) Int. Cl.: F16P 1/02

(54) **SICHERHEITSUMHAUSUNG ZUM ABSICHERN EINER GEFÄHRLICHEN MASCHINE**
SAFETY HOUSING FOR SECURING A HAZARDOUS MACHINE
ENCEINTE DE SÉCURITÉ PERMETTANT DE SÉCURISER UNE MACHINE DANGEREUSE

(30) Priorität: 12.07.2017 DE 102017115603
(43) Veröffentlichungstag der Anmeldung: 16.01.2019
(73) Patentinhaber: Gebr. Schmidt Fabrik für Feinmechanik GmbH & Co. KG, 78112 St. Georgen (DE)
(72) Erfinder: Meyer, Andreas Leo, 78120 Furtwangen (DE)
(74) Vertreter: Witte, Weller & Partner Patentanwälte mbB

(56) Entgegenhaltungen:
- EP-A1- 0 561 091
- EP-A1- 0 589 096
- WO-A1-2013/170558
- DE-A1- 19 515 811
- DE-A1- 19 632 427
- DE-U- 1 870 128
- US-A- 3 334 375

## Beschreibung

Die vorliegende Erfindung betrifft eine Sicherheitsumhausung zum Absichern einer gefährlichen Maschine, insbesondere zum Absichern einer Presse, mit einer ersten und einer zweiten feststehenden Seitenwand, die mit einem lateralen Abstand zueinander angeordnet sind und so ein Innenvolumen aufspannen, und mit einem ersten beweglichen Türelement und einem zweiten beweglichen Türelement, wobei die beiden Türelemente horizontal gegenläufig zueinander zwischen einer jeweiligen ersten und einer jeweiligen zweiten Endposition verschiebbar sind, wobei die beiden Türelemente in der jeweiligen ersten Endposition quer zu der ersten und der zweiten Seitenwand stehen und somit das Innenvolumen zusammen mit der ersten und der zweiten Seitenwand zu drei Seiten hin begrenzen, und wobei die beiden Türelemente in der jeweiligen zweiten Endposition in dem Innenvolumen angeordnet sind und somit einen Zugang zu dem Innenvolumen freigeben.

Eine solche Sicherheitsumhausung ist aus DE 10 2013 005 310 A1 bekannt.

Es ist üblich, gefährliche Maschinen, wie etwa eine Presse, eine Dreh-, Fräs- und/oder Bohrmaschine, eine Schleifmaschine etc., mit Hilfe von sogenannten trennenden Schutzeinrichtungen gemäß der Internationalen Norm ISO 14120:2015 abzusichern. Trennende Schutzeinrichtungen können Gehäusewände, Zäune, Türen, Klappen, aber auch Lichtschranken, Lichtgitter etc. sein. Die trennenden Schutzeinrichtungen begrenzen ein Innenvolumen und bilden somit eine Sicherheitszelle, in der die gefährliche Maschine so angeordnet ist, dass ein unkontrollierter Eingriff in den gefährlichen Arbeitsbereich von außen verhindert ist. Häufig ist aber ein kontrollierter Zugang in das Innenvolumen bzw. die Sicherheitszelle notwendig, beispielsweise um ein neues Werkstück zur Bearbeitung in die Maschine einzuspannen, um einen Bearbeitungsvorgang einzurichten oder um einen Fehler zu beheben. Dementsprechend besitzen viele Sicherheitsumhausungen ein bewegliches Türelement, das den Zugang in den gefährlichen Arbeitsbereich der Maschine wahlweise ermöglicht. Häufig ist das Türelement mit einem Sicherheitsschalter versehen, der ein Freigabesignal für den Arbeitsbetrieb der Maschine erzeugt. In der Regel darf der gefährliche Arbeitsbetrieb der Maschine nur bei geschlossenem Türelement erfolgen.

Die oben genannte DE 10 2013 005 310 A1 offenbart eine gattungsgemäße Sicherheitsumhausung mit mehreren Seitenwänden und einem vertikal verschiebbaren Türelement, das auf einer kreisabschnittsförmigen Bewegungsbahn geführt ist. Die bekannte Sicherheitsumhausung mag für die Absicherung einer Dreh-, Fräs- oder Schleifmaschine gut geeignet sein. Ein vertikal bewegliches Türelement besitzt jedoch den Nachteil, dass das Eigengewicht des Türelements gegen Absturz gesichert werden muss, um ein unbeabsichtigtes Einklemmen von beispielsweise der Hand eines Bedieners durch herunterfallen des Türelements auszuschließen. Beispielsweise kann ein vertikal verschiebbares Türelement durch Gegengewichte oder durch eine Klemmung gesichert werden, was allerdings einen zusätzlichen konstruktiven Aufwand darstellt.

Alternativ gibt es dementsprechend Sicherheitsumhausungen mit horizontal bewegten Türelementen. Beispielsweise gibt es CNC-Drehmaschinen, bei denen der Arbeitsbereich über zwei horizontal gegenläufig zueinander verschiebbare Türelemente abgesichert ist, wie etwa die CNC-Drehmaschine WDC460 der Maschinen-Wagner Werkzeugmaschinen GmbH (siehe http://www.easyfairs.com/uploads/tx_ef/P-MW-querformat-15.10.2012.pdf). Ein Nachteil dieser Art von Sicherheitsumhausungen ist der große Platzbedarf, den die horizontal verschiebbaren Türelemente in der Öffnungsbewegung benötigen. Dieser Platzbedarf ist besonders nachteilig, wenn eine vergleichsweise kleine Maschine, wie etwa eine kleine Elektropresse, abgesichert werden soll.

Aus der DE 195 15 811 A1 ist ein Eckschrank mit schräg zueinander verlaufenden Führungsbahnen bekannt, bei dem die Türelemente bei einer Öffnungs- und Schließbewegung eine kombinierte Linear- und Schwenkbewegung ausführen.

Ein Wandsystem mit mehreren verschiebbaren Wandpaneelen ist ferner aus der US 3,334,375 A bekannt.

Vor diesem Hintergrund ist es eine Aufgabe der vorliegenden Erfindung, eine Sicherheitsumhausung der vorstehend beschriebenen Art anzugeben, die sich mit geringem Platzbedarf auf einfache und kostengünstige Weise realisieren lässt.

Gemäß Anspruch 1 wird diese Aufgabe durch eine Sicherheitsumhausung der eingangs genannten Art gelöst, wobei die beiden Türelemente eine kombinierte Linear- und Schwenkbewegung ausführen, wenn sie zwischen der jeweiligen ersten Endposition und der jeweiligen zweiten Endposition verschoben werden, und wobei die kombinierte Linear- und Schwenkbewegung überwiegend horizontal verläuft, wobei die beiden Türelemente jeweils ein erstes und ein zweites Führungselement aufweisen, wobei sich das erste Führungselement des ersten Türelements und das erste Führungselement des zweiten Türelements jeweils entlang einer ersten linearen Bahn bewegen, und wobei sich das zweite Führungselement des ersten Türelements zeitgleich entlang einer zweiten linearen Bahn bewegt und sich das zweite Führungselement des zweiten Türelements zeitgleich entlang einer dritten linearen Bahn bewegt, wenn die beiden Türelement zwischen der jeweiligen ersten Endposition und der jeweiligen zweiten Endposition verschoben werden, wobei die zweite und die dritte Bahn jeweils schräg zu der ersten Bahn angeordnet sind, und wobei die Sicherheitsumhausung ferner eine Bodenplatte mit einer ersten Führungsnut, die die erste lineare Bahn definiert, eine zweite Führungsnut, die die zweite lineare Bahn definiert, sowie eine dritte Führungsnut, die die dritte lineare Bahn definiert, aufweist, wobei die zweite Führungsnut an der ersten Führungsnut an einer Stelle beginnt, die der Position des zweiten Führungselements des ersten Türelements bei geschlossenem ersten Türelement entspricht, und von hier aus schräg in Richtung der ersten Seitenwand verläuft, wobei die zweite Führungsnut von der ersten Führungsnut an einem Punkt abzweigt, der sich zwischen einer Mitte der ersten Führungsnut und einem ersten Ende der ersten Führungsnut befindet, und wobei die dritte Führungsnut an der ersten Führungsnut an einer Stelle beginnt, die der Position des zweiten Führungselements des zweiten Türelements bei geschlossenem zweiten Türelement entspricht, und spiegelbildlich zu der zweiten Führungsnut schräg in Richtung der zweiten Seitenwand verläuft, wobei die dritte Führungsnut von der ersten Führungsnut an einem zweiten Punkt abzweigt, der sich zwischen der Mitte der ersten Führungsnut und einem zweiten Ende der ersten Führungsnut befindet, so dass die drei Führungsnuten in einer Draufsicht von oben drei winklig zueinander angeordnete Führungsbahnen bilden. Vorzugsweise sind die Türelemente in der jeweiligen zweiten Endposition überwiegend, besonders bevorzugt sogar vollständig, in dem Innenvolumen angeordnet.

Die neue Sicherheitsumhausung verwendet also mehrere Türelemente, deren Öffnungsbewegung im Wesentlichen horizontal erfolgt. Daher kann man bei der neuen Sicherheitsumhausung auf aufwendige Halte- und Sicherheitsmechanismen, die das Türelement unter allen Umständen gegen die Schwerkraft halten, verzichten. Infolgedessen kann die neue Sicherheitsumhausung auf relativ einfache und kostengünstige Weise realisiert werden.

Dadurch, dass die Türelemente zudem eine kombinierte Linear- und Schwenkbewegung ausführen, ist es ferner möglich, die Sicherheitsumhausung mit einem geringen Platzbedarf zu realisieren. Aufgrund der Schwenkkomponente der kombinierten Bewegung benötigen die Türelemente seitlich von der Zugangsöffnung weniger Platz als bei konventionellen Sicherheitsumhausungen, bei denen das Türelement eine rein lineare Horizontalbewegung ausführt. Bevorzugt beinhaltet die kombinierte Linear- und Schwenkbewegung einen linearen Anteil, aufgrund dessen der Zugang zu dem Innenvolumen geöffnet wird, sowie einen Schwenkanteil, aufgrund dessen die Türelemente quer zu der horizontalen Öffnungsbewegung verschwenkt werden. In einigen bevorzugten Ausführungsbeispielen durchläuft ein Punkt an der (in Schließrichtung gesehen) jeweiligen vorderen Schließkante der Türelemente eine weitgehend lineare Bewegungsbahn, während ein Punkt am jeweiligen hinteren Ende der Türelemente (in Schließrichtung gesehen) eine Schwenkbewegung ausführt.

Wie anhand der nachfolgenden Ausführungsbeispiele dargestellt ist, kann eine solche kombinierte Linear- und Schwenkbewegung auf kostengünstige Weise realisiert werden. Die neue Sicherheitsumhausung kann zudem auf einfache und kostengünstige Weise skaliert werden, so dass verschieden große Sicherheitsumhausungen mit einer einheitlichen Konstruktion realisiert werden können. Dies spart Entwicklungskosten, wenn eine Sicherheitsumhausung an eine neue Maschine oder einen neuen Maschinentyp adaptiert werden soll.

Insgesamt lässt sich die neue Sicherheitsumhausung daher auf einfache und kostengünstige Weise realisieren und sie erfordert einen geringen Platzbedarf. Die neue Sicherheitsumhausung ist daher besonders vorteilhaft für relativ kleine und kompakte Maschinen, wie etwa eine Ständerbohrmaschine oder eine kleine Elektropresse. Die oben genannte Aufgabe ist vollständig gelöst.

In einer bevorzugten Ausgestaltung ist das erste Türelement in der zweiten Endposition parallel zu der ersten Seitenwand angeordnet. Vorzugsweise steht das erste Türelement in der zweiten Endposition dicht an der ersten Seitenwand. In einigen Ausführungsbeispielen kann das erste Türelement in der zweiten Endposition einen lateralen Abstand von der ersten Seitenwand haben, der kleiner als 20 cm und besonders bevorzugt kleiner als 10 cm ist. Des Weiteren ist es bevorzugt, wenn das erste Türelement in der zweiten Endposition orthogonal im Vergleich zu der ersten Endposition steht. Dementsprechend beinhaltet die Linear- und Schwenkbewegung der Türelemente in einigen bevorzugten Ausführungsbeispielen eine Schwenkbewegung der Türelemente um jeweils etwa 90°.

Die bevorzugten Ausgestaltungen ermöglichen eine besonders kompakte und platzsparende Realisierung. In einigen bevorzugten Ausführungsbeispielen spannen die erste und zweite Seitenwand und die Türelemente ein Innenvolumen auf, das eine im Wesentlichen rechteckige Grundfläche besitzt. Das erste Türelement steht in der ersten Endposition senkrecht zu der ersten und zweiten Seitenwand und in der zweiten Position parallel zu und dicht an der ersten Seitenwand. Diese Ausgestaltung ermöglicht eine besonders einfache und kostengünstige Realisierung.

Erfindungsgemäß weisen die Türelemente jeweils ein erstes und ein zweites Führungselement auf, wobei sich das erste Führungselement des ersten Türelements entlang einer ersten linearen Bahn bewegt und wobei sich das zweite Führungselement des ersten Türelements zeitgleich entlang einer zweiten Bahn bewegt, wenn das erste Türelement zwischen der ersten Endposition und der zweiten Endposition verschoben wird, wobei die erste und die zweite Bahn schräg zueinander angeordnet sind. In bevorzugten Ausführungsbeispielen ist auch die zweite Bahn eine lineare Bahn.

Unter dem Begriff "schräg" wird vorliegend also verstanden, dass die zweite Bahn, in der das zweite Führungselement geführt ist, unter einem spitzen Winkel (d.h. einem Winkel kleiner 90°) zu der ersten Bahn, in der das erste Führungselement geführt ist, angeordnet ist. Bevorzugt ist die zweite Bahn unter einem Winkel kleiner 60°, besonders bevorzugt unter einem Winkel von 45°, relativ zu der ersten Bahn ausgerichtet.

Das erste Führungselement befindet sich vorzugsweise im Bereich der Verlängerung bzw. unterhalb einer Schließkante des Türelements, während das zweite Führungselement mit einem Abstand von der Schließkante angeordnet ist, der größer als die halbe Türbreite des Türelements, aber kleiner als die gesamte Türbreite des Türelements ist. Vorzugsweise beträgt der Abstand zwischen dem ersten und dem zweiten Führungselement mehr als 50%, aber weniger als 80% der Türbreite des Türelements.

Die beschriebene schräge Anordnung der ersten Bahn und der zweiten Bahn zueinander sowie die Anordnung der ersten und zweiten Führungselemente führt dazu, dass das Türelement während der Öffnungs- und Schließbewegung in keiner Position über die Vorderkante der ersten Bahn hinausragt, so dass das Türelement in keiner Stellung aus der Sicherheitsumhausung nach vorne hin herausragt.

In dieser Ausgestaltung besitzen die Türelemente zwei Dreh- bzw. Ankerpunkte, mit deren Hilfe die kombinierte Linear- und Schwenkbewegung realisiert ist. Vorteilhaft verläuft die erste lineare Bahn parallel zur Ebene der Türelemente in der ersten Endposition. Diese Ausgestaltungen tragen zu einer besonders einfachen und kostengünstigen Realisierung bei. Sie besitzen darüber hinaus den Vorteil, dass eine rein lineare Öffnungsbewegung durch Entfall des zweiten Führungselements auf sehr einfache Weise realisiert werden kann, wenn dies für eine bestimmte Adaption der Sicherheitsumhausung gewünscht ist. Die neue Sicherheitsumhausung besitzt ein erstes und ein zweites Türelement, die horizontal gegenläufig zueinander verschiebbar sind. Es ist von Vorteil, wenn die jeweiligen ersten Führungselemente der beiden Türelemente kollinear zueinander bewegt werden und insbesondere entlang einer gemeinsamen Geraden laufen, weil der konstruktive Aufwand so noch weiter reduziert ist.

Erfindungsgemäß besitzt die neue Sicherheitsumhausung eine Bodenplatte mit Führungsnuten, die die erste lineare Bahn und die zweite Bahn definieren.

Die Führungselemente greifen vorteilhaft in die Führungsnuten ein. Es ist bevorzugt, wenn die Führungselemente in der jeweiligen Führungsnut leicht drehbar sind. In einigen Ausführungsbeispielen beinhalten die Führungselemente daher Kugellager, die eine Drehbewegung in den jeweiligen Führungsnuten erleichtern. Diese Ausgestaltungen ermöglichen die Realisierung der kombinierten Linear- und Schwenkbewegung auf konstruktiv einfache und robuste Weise. Außerdem tragen die Führungselemente in den Führungsnuten vorteilhaft dazu bei, die Türelemente gegen seitliche Querkräfte zu halten, so dass die Türelemente im geschlossenen Zustand nicht ohne Weiteres in die Sicherheitszelle hineingedrückt werden kann.

In einer weiteren Ausgestaltung weist das erste Türelement ein drittes Führungselement auf, an dem das erste Türelement aufgehängt ist.

In dieser Ausgestaltung besitzt das erste Türelement ein Lager am oberen Ende, welches die Gewichtskraft des zumindest einen Türelements überwiegend oder gänzlich aufnimmt. Das dritte Führungselement kann ein Gleit- oder Rollenblock sein, der auf einer geeigneten Fläche und/oder in einer geeigneten Führungsbahn am oberen Ende des ersten Türelements läuft. In Vertikalrichtung bildet das dritte Führungselement in den bevorzugten Ausführungsbeispielen ein Festlager, wohingegen das erste und zweite Führungselement in Vertikalrichtung ein Loslager bilden. Die Ausgestaltung ermöglicht einen schnellen und geräuscharmen Öffnungs- und Schließvorgang. Sie trägt außerdem dazu bei, das erste Türelement noch besser gegen Querkräfte von außen zu fixieren, beispielsweise gegen ein unerwünschtes Eindrücken von außen. In einigen bevorzugten Ausführungsbeispielen leitet das dritte Führungselement denselben Bewegungsablauf in das erste Türelement ein, wie die Führungsnuten und Führungselemente der vorher erläuterten Ausgestaltung. Beispielsweise kann das dritte Führungselement in einer Führungsbahn laufen, die im Wesentlichen der Führungsnut für das zweite Führungselement entspricht.

In einer weiteren Ausgestaltung sind am Grund der Führungsnuten Durchgangslöcher angeordnet, die sich quer zu den Führungsnuten durch die Bodenplatte hindurch erstrecken.

Diese Ausgestaltung besitzt den Vorteil, dass Späne, Schmutzteilchen oder andere Kleingegenstände, die von oben in die Führungsnuten fallen könnten, durch den Bewegungsablauf der Türelemente aus der Führungsnut herausgeschoben werden. Daher besitzen die Durchgangslöcher in bevorzugten Ausführungsbeispielen einen lichten Innendurchmesser, der annähernd gleich groß oder sogar größer als die lichte Weite der jeweiligen Führungsnut ist. In einigen Ausführungsbeispielen sind die Durchgangslöcher Durchgangsbohrungen, die insbesondere am Anfang und am Ende der jeweiligen Führungsnut angeordnet sind. Die Ausgestaltungen tragen zu einer störungsfreien Funktion der Sicherheitsumhausung vorteilhaft bei.

In einer weiteren Ausgestaltung besitzt das erste Türelement eine Bürste mit elektrisch leitfähigen Borsten, die auf der Bodenplatte und/oder einem anderen feststehenden Umhausungsteil, wie etwa einem über dem ersten Türelement angeordneten Rahmenelement, gleiten. Des Weiteren ist es in dieser Ausgestaltung bevorzugt, wenn das erste Türelement und bevorzugt auch die erste und zweite Seitenwand aus einem elektrisch leitfähigen Material bestehen und/oder großflächig mit einem elektrisch leitfähigen Material versehen sind. Beispielsweise können die Seitenwände und das erste Türelement in einigen bevorzugten Ausführungsbeispielen mit einem leitfähig beschichteten Polycarbonatmaterial hergestellt sein.

Die Ausgestaltung erleichtert eine vorteilhafte ESD (Electro Static Discharge)-Realisierung, wie sie wünschenswert ist, wenn empfindliche elektronische Bauelemente innerhalb der Sicherheitsumhausung bearbeitet oder verarbeitet werden sollen.

In einer weiteren Ausgestaltung besitzt die Sicherheitsumhausung zumindest eine Abdeckleiste, die quer zu der ersten Seitenwand angeordnet ist und die eine verbleibende Lücke zwischen der ersten Seitenwand und dem ersten Türelement in der zweiten Position überdeckt. In bevorzugten Ausführungsbeispielen überdeckt die Abdeckleiste eine verbleibende Lücke vollständig.

Die Ausgestaltung trägt vorteilhaft dazu bei, gefährliche Quetschstellen, an denen sich ein Bediener durch Einklemmen eines Fingers oder dergleichen verletzen könnte, zu vermeiden. Vorteilhaft besitzt die Abdeckleiste in einigen Ausführungsbeispielen einen lateralen Abstand zu dem ersten Türelement, der größer als eine Fingerbreite ist. Beispielsweise kann der laterale Abstand der Abdeckleiste zu dem ersten Türelement größer als 3 cm sein, um das Einklemmen eines Fingers während der kombinierten Linear- und Schwenkbewegung an der Abdeckleiste zu vermeiden.

Die beiden Türelemente sind im Bereich der ersten Endposition horizontal gegenläufig verschiebbar.

Die Verwendung von zwei gegenläufigen Türelementen besitzt den Vorteil, dass die Öffnungs- und Schließbewegung schneller erfolgen kann als mit einem einzelnen, entsprechend größeren Türelement. Dabei bewegen sich das erste und das zweite Türelement hier im Bereich der ersten Endposition gegenläufig aufeinander zu oder gegenläufig voneinander weg. In bevorzugten Ausführungsbeispielen stehen das erste und das zweite Türelement in der ersten Endposition planparallel nebeneinander. In einigen Ausführungsbeispielen kann zwischen dem ersten und dem zweiten Türelement in der jeweiligen ersten Endposition ein Öffnungsspalt verbleiben, der größer als eine Fingerbreite ist, aber kleiner als eine Handbreite. Beispielsweise kann der Öffnungsspalt in einigen Ausführungsbeispielen zwischen zwei und fünf Zentimeter betragen. Diese Ausgestaltungen ermöglichen eine große Zugangsöffnung bei geringem Platzbedarf der Sicherheitsumhausung.

In einer weiteren Ausgestaltung besitzt die Sicherheitsumhausung einen gemeinsamen Antrieb, der das erste und das zweite Türelement zwischen der ersten und der zweiten Endposition bewegt.

Diese Ausgestaltung trägt zu einer sehr kostengünstigen Realisierung bei. In bevorzugten Ausführungsbeispielen beinhaltet der gemeinsame Antrieb einen einzelnen Antriebsmotor, insbesondere einen Servomotor, der die Antriebskraft für das erste und für das zweite Türelement liefert. In anderen Ausführungsbeispielen kann der gemeinsame Antrieb einen von Hand zu betätigenden Mechanismus beinhalten, wie etwa einen Hebel. Auch in diesen Ausführungsbeispielen trägt der Verzicht auf einen separaten zweiten Antrieb für das zweite Türelement zu einer kostengünstigen Realisierung bei.

In einer weiteren Ausgestaltung weist der gemeinsame Antrieb ein Umschlingungsgetriebe mit einem ersten Trum und einem gegenläufigen zweiten Trum auf, wobei das erste Türelement mit dem ersten Trum gekoppelt ist und wobei das zweite Türelement mit dem zweiten Trum gekoppelt ist.

In dieser Ausgestaltung beinhaltet der gemeinsame Antrieb einen Riemen, eine Kette oder ein vergleichbares Zugelement, das über eine Umlenkrolle geführt ist und somit zwei gegenläufig bewegte Abschnitte (Trume) besitzt. Bevorzugt laufen die Trume parallel zu der ersten Führungsnut, was eine sehr platzsparende und einfache Realisierung ermöglicht. Die Ausgestaltung trägt vorteilhaft zu einer robusten, kostengünstigen und platzsparenden Realisierung bei.

In einer weiteren Ausgestaltung weist der gemeinsame Antrieb ein variables Antriebsmoment auf, welches bei Annäherung der Türelemente an die erste Position abnimmt.

In einigen Ausführungsbeispielen kann das variable Antriebsmoment durch eine entsprechend ausgelegte Übersetzung eines Getriebes realisiert sein. In bevorzugten Ausführungsbeispielen wird jedoch ein elektrischer Servomotor in Verbindung mit einer Antriebssteuerung verwendet, die dazu eingerichtet ist, das Antriebsmoment des Servomotors während der Schließbewegung im Bereich der ersten Endposition, d.h. bei einer Annäherung an die erste Endposition, abzusenken. Die Ausgestaltung trägt vorteilhaft dazu bei, Verletzungsgefahren durch Einklemmen eines Fingers oder anderen Körperteils beim Schließvorgang zu reduzieren. Vorteilhaft kann das variable Antriebsmoment auch in anderen Ausgestaltungen verwendet sein, die lediglich ein Türelement besitzen.

In einer weiteren Ausgestaltung besitzt die Sicherheitsumhausung ein Verriegelungselement, das das zumindest eine Türelement in der ersten Endposition mechanisch blockiert. In einigen Ausführungsbeispielen ist das Verriegelungselement im Bereich des zweiten Führungselements angeordnet. Vorteilhaft kann das Verriegelungselement mit Hilfe eines abgewinkelten Nutverlaufs realisiert sein, in dem das zweite Führungselement geführt ist. Die Ausgestaltung trägt vorteilhaft dazu bei, ein unautorisiertes Öffnen der Sicherheitsumhausung durch Krafteinwirkung von außen zu verhindern.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Darstellung einer Elektropresse mit einer Sicherheitsumhausung gemäß der vorliegenden Erfindung,
- Fig. 2: eine perspektivische Darstellung eines Ausführungsbeispiels der neuen Sicherheitsumhausung (ohne die Presse aus Fig. 1) mit geschlossenen Türelementen,
- Fig. 3: die Sicherheitsumhausung aus Fig. 2 mit halb geöffneten Türelementen,
- Fig. 4: die Sicherheitsumhausung aus Fig. 2 mit vollständig geöffneten Türelementen, wobei aus Gründen der Übersichtlichkeit die feststehenden Seitenwände lediglich als Rahmenprofile dargestellt sind,
- Fig. 5: eine Ausschnittvergrößerung, die Führungselemente am unteren Ende der Türelemente der Sicherheitsumhausung aus Fig. 2 zeigt,
- Fig. 6: eine Bodenplatte mit Führungsnuten, die bei der Sicherheitsumhausung aus Fig. 2 Verwendung findet,
- Fig. 7: einen gemeinsamen Antrieb für die Türelemente der Sicherheitsumhausung aus Fig. 2, und
- Fig. 8: die obere Führung des linken Türelements der Sicherheitsumhausung aus Fig. 2.

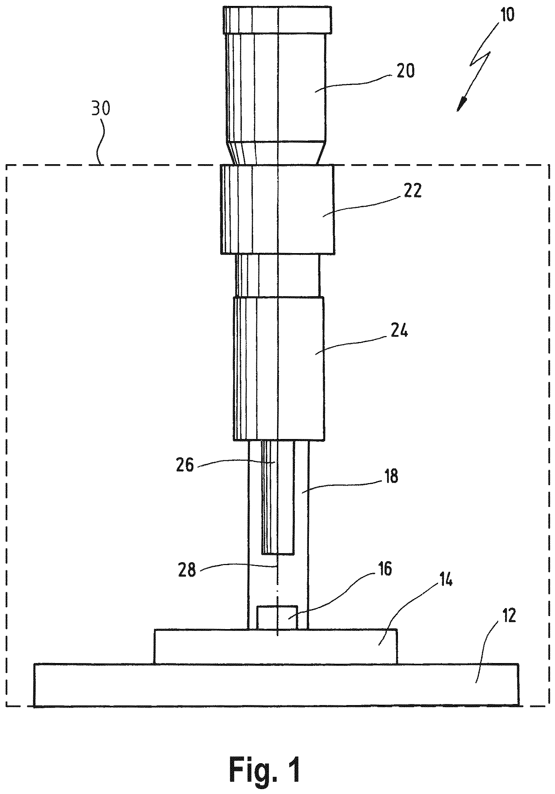

In Fig. 1 ist eine Elektropresse als ein Beispiel für eine gefährliche Maschine, die mit Hilfe einer Sicherheitsumhausung abgesichert werden soll, mit der Bezugsziffer 10 bezeichnet. Beispielsweise kann die Elektropresse 10 gemäß der deutschen Patentschrift DE 103 33 416 B3 realisiert sein. Die Elektropresse 10 besitzt eine Grundplatte 12, auf der sich ein Werkstückhalter 14 mit einem zu bearbeitenden Werkstück 16 befindet. Von der Grundplatte 12 ragt eine Säule 18 nach oben. Am oberen Ende der Säule 18 befindet sich ein elektrischer Antriebsmotor 20, darunter ein Drehmomentwandler 22 und darunter eine Spindel 24. Aus der Spindel 24 ragt ein Pressenstößel 26 nach unten heraus, der mit Hilfe des Antriebsmotors 20, des Drehmomentwandlers 22 und der Spindel 24 entlang einer vertikalen Achse 28 bewegt werden kann, um das Werkstück 16 zu bearbeiten.

Mit der Bezugsziffer 30 ist eine hier nur schematisch angedeutete Sicherheitsumhausung bezeichnet, die gemäß den Grundzügen der vorliegenden Erfindung realisiert ist und die anhand der nachfolgenden Figuren in einem bevorzugten Ausführungsbeispiel beschrieben wird. Anstelle der in Fig. 1 dargestellten Elektropresse könnte die neue Sicherheitsumhausung 30 zum Absichern von anderen gefährlichen Maschinen verwendet werden, beispielsweise Schneidmaschinen, Stanzmaschinen, Bohrmaschinen, Fräsmaschinen, Schleifmaschinen oder dergleichen.

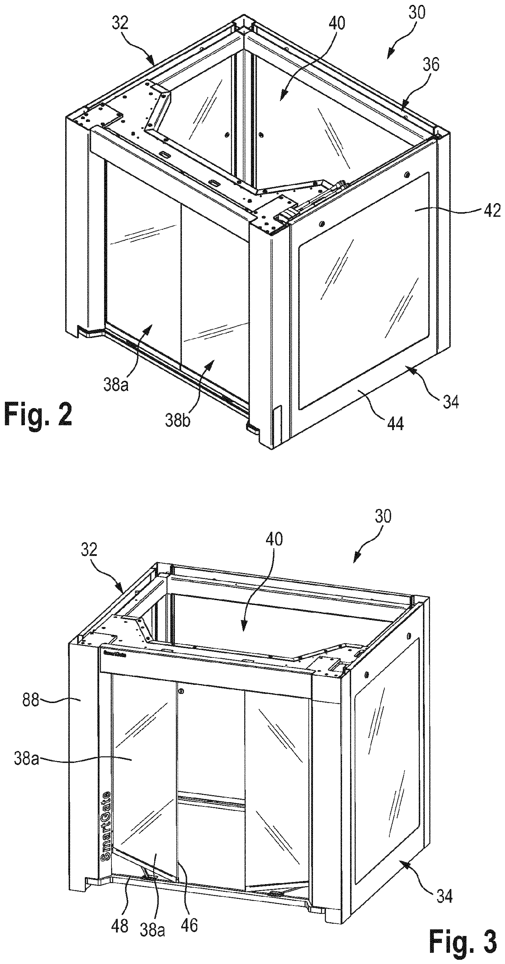

Bezugnehmend auf die Figuren 2 bis 4 besitzt die Sicherheitsumhausung 30 eine erste feststehende Seitenwand 32, eine zweite feststehende Seitenwand 34 und - in diesem Ausführungsbeispiel - eine feststehende Rückwand 36. Die Rückwand 36 kann in anderen Ausführungsbeispielen entfallen oder lediglich rudimentär vorhanden sein, wenn ein Zugriff in den gefährlichen Arbeitsbereich der abzusichernden Maschine von hinten auf andere Weise unterbunden ist, beispielsweise weil die Maschinenrückseite einen Zugriff in den Arbeitsbereich von hinten unmöglich macht. Umgekehrt kann die Sicherheitsumhausung 30 in weiteren Ausführungsbeispielen eine hier nicht dargestellte Deckplatte besitzen, die die Sicherheitsumhausung 30 nach oben hin verschließt.

Des Weiteren besitzt die Sicherheitsumhausung 30 hier ein erstes Türelement 38a und ein zweites Türelement 38b, die im geschlossenen Zustand zusammen mit den Seitenwänden 32, 34 und der Rückwand 36 ein Innenvolumen 40 begrenzen. Das Innenvolumen 40 bildet eine Sicherheitszelle, in der die gefährliche Maschine, wie etwa die Presse 10 aus Fig. 1, angeordnet werden kann. Wie in Fig. 1 schematisch dargestellt ist, kann ein Teil der Maschine dabei nach oben aus der Sicherheitszelle herausstehen, sofern von diesem Teil keine Gefahr für den Bediener der Maschine ausgeht.

Wie man in Fig. 2 erkennen kann, besitzt die Sicherheitsumhausung in diesem Ausführungsbeispiel eine Quaderform mit zwei parallelen Seitenwänden 32, 34, die mit einem lateralen Abstand D zueinander angeordnet sind und somit das Innenvolumen 40 an zwei gegenüberliegenden Seiten begrenzen. Die Rückwand 36 und die Türelemente 38a, 38b stehen hier parallel zueinander und jeweils senkrecht zu den Seitenwänden 32, 34. In anderen Ausführungsbeispielen können die Seitenwände 32, 34 V-förmig zueinander angeordnet sein, etwa um zusammen mit weiteren Seitenwänden ein sechseckiges oder achteckiges Innenvolumen aufzuspannen. Darüber hinaus können die Seitenwände 32, 34 prinzipiell eine gebogene Form besitzen, wenngleich die hier dargestellte quaderförmige Umhausung eine besonders einfache und kostengünstige Realisierung ermöglicht.

In dem hier dargestellten Ausführungsbeispiel besitzt die Sicherheitsumhausung 30 eine - hier quaderförmige - Rahmenstruktur aus Stahl- und/oder Aluminiumprofilen mit transparenten Scheiben 42 aus einem Polycarbonatmaterial. Dementsprechend werden die Seitenwände 32, 34 und die Rückwand 36 jeweils von einem Rahmenprofil 44 gebildet, das eine transparente Scheibe 42 umgibt. In anderen Ausführungsbeispielen können die Seitenwände 32, 34 und/oder die Rückwand 36 Gitterelemente und/oder intransparente Platten beinhalten, beispielsweise aus Aluminium oder aus einem Verbundwerkstoff. In einigen bevorzugten Ausführungsbeispielen können die Seitenwände 32, 34 und die Rückwand 36 mit einer leitfähigen Beschichtung (hier nicht dargestellt) versehen sein, um eine elektrostatische Aufladung zu verhindern.

Wie man in Fig. 2 erkennen kann, stehen das erste und das zweite Türelement 38a, 38b im geschlossenen Zustand der Sicherheitsumhausung 30 planparallel nebeneinander und sie bilden gemeinsam "eine vierte Seitenwand". In den bevorzugten Ausführungsbeispielen besitzen die Türelemente 38a, 38b jeweils eine großflächige transparente Scheibe. In einigen bevorzugten Ausführungsbeispielen sind die Türelemente der Umhausung 30 weitgehend rahmenlos realisiert und sie nehmen mehr als 80 % der gesamten Frontfläche der Sicherheitsumhausung 30 ein, um einen möglichst großen Zugang in die Sicherheitszelle zu ermöglichen.

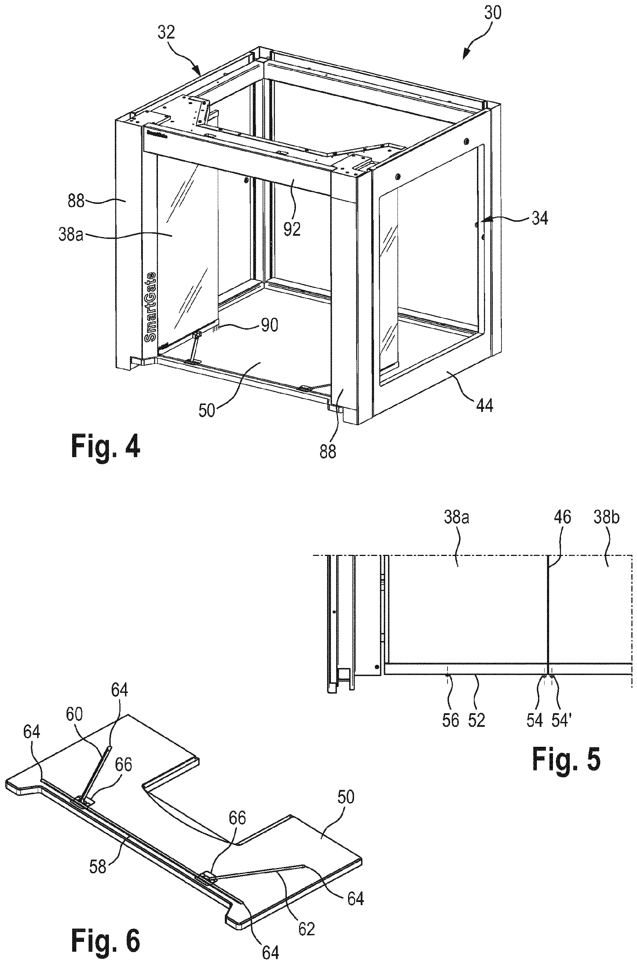

Fig. 3 zeigt eine Momentaufnahme während der Öffnung der Türelemente 38a, 38b. Wie man hier erkennen kann, bewegt sich die Schließkante 46 des linken (ersten) Türelements 38a entlang einer linearen ersten Bahn. Im Gegensatz dazu verschwenkt das erste Türelement 38a als Ganzes um eine Vertikalachse (hier nicht eingezeichnet), so dass das erste Türelement 38a insgesamt eine kombinierte Linear- und Schwenkbewegung ausführt, wenn es aus der ersten Endposition gemäß Fig. 2 in eine zweite Endposition gemäß Fig. 4 verschoben wird. In der zweiten Endposition gemäß Fig. 4 steht das erste Türelement 38a hier parallel zu der ersten Seitenwand 32. Gleichermaßen führt das zweite Türelement 38b in diesem Ausführungsbeispiel eine horizontal gegenläufige Linear- und Schwenkbewegung aus, an deren Ende das zweite Türelement 38b parallel zu der zweiten Seitenwand 42 steht. Aus Gründen der Darstellung ist in Fig. 4 nur das Rahmenprofil 44 der zweiten Seitenwand 34 dargestellt.

Fig. 5 zeigt den unteren Teil des ersten Türelements 38a in der ersten Endposition neben dem zweiten Türelement 38b, allerdings ohne die in Fig. 6 dargestellte Bodenplatte 50 der Sicherheitsumhausung 30. Die Bodenplatte 50 kann aus Materialien wie Holz, Kunststoff, Aluminium u.a. hergestellt sein. Sie kann den gesamten Bodenbereich der Sicherheitsumhausung 30 bilden oder nur einen vorderen Teil.

Das Türelement 38a besitzt hier ein bodenseitiges Rahmenprofil 52, an dem ein erstes und ein zweites Führungselement 54, 56 angeordnet sind. Die Führungselemente 54, 56 sind hier kugelgelagerte, drehbare Zapfen, die von dem Rahmenprofil 52 senkrecht nach unten hervorstehen. Das erste Führungselement 54 befindet sich hier im Bereich der Verlängerung der Schließkante 46, während das zweite Führungselement 56 mit einem Abstand von der Schließkante 46 angeordnet ist, der größer als die halbe Türbreite des Türelements 38a ist. Der Abstand der beiden Führungselemente 54, 56 entspricht vorzugsweise 60-80% der gesamten Türbreite des Türelements 38a.

Wie man in Fig. 6 erkennen kann, sind in der Bodenplatte 50 drei Führungsnuten 58, 60, 62 ausgebildet. Die Führungsnuten können direkt in die Bodenplatte 50 eingearbeitet sein, beispielsweise gefräst, oder sie können durch Einsätze aus Kunststoff oder Metall realisiert sein. Die Führungsnut 58 verläuft bevorzugt parallel zu der Planebene, die das erste und zweite Türelement 38a, 38b im geschlossenen Zustand aufspannen. Die Führungsnut 60 beginnt an der Führungsnut 58 an einer Stelle, die der Position des zweiten Führungselements 56 bei geschlossenem Türelement 38a entspricht. Von hier aus verläuft die Führungsnut 60 schräg in Richtung der ersten Seitenwand 32. Spiegelbildlich dazu verläuft die dritte Führungsnut 62 schräg in Richtung der zweiten Seitenwand 34. In einer Draufsicht von oben bilden die Führungsnuten 58, 60, 62 drei winklig zueinander angeordnete Führungsbahnen.

Die zweite Führungsnut 60, die entlang der zweiten Bahn verläuft, ist schräg zu der ersten Führungsnut 58 ausgerichtet, die entlang der ersten linearen Bahn verläuft. Vorzugsweise verläuft die zweite Führungsnut 60 zu der ersten Führungsnut 58 unter einem Winkel von ca. 40°-60°, besonders bevorzugt unter einem Winkel von 45°. Gleiches gilt für die dritte Führungsnut 62.

Die zweite Führungsnut 60 zweigt von der ersten Führungsnut 58 an einem Punkt ab, der sich zwischen der Mitte der ersten Führungsnut 58 und einem ersten Ende der ersten Führungsnut 58 befindet. Vorzugsweise hat dieser Punkt in etwa den gleichen Abstand von der Mitte der ersten Führungsnut 58 und dem ersten Ende der ersten Führungsnut 58. Die dritte Führungsnut 62 zweigt von der ersten Führungsnut 58 an einem Punkt ab, der sich zwischen der Mitte der ersten Führungsnut 58 und einem zweiten Ende der ersten Führungsnut 58 befindet. Vorzugsweise hat dieser Punkt in etwa den gleichen Abstand von der Mitte der ersten Führungsnut 58 und dem zweiten Ende der ersten Führungsnut 58.

Das erste Führungselement 54 des ersten Türelements 38a und das entsprechende erste Führungselement 54' des Türelements 38b ragen jeweils in die erste Führungsnut 58 hinein. Sie werden beim Öffnen der Türelemente 38a, 38b horizontal gegenläufig in der Führungsnut 58 geführt. Das zweite Führungselement 56 ragt in die zweite Führungsnut 60 hinein und wird beim Öffnen des Türelements 38 in der Führungsnut 60 geführt. Infolge der schrägen Anordnung der Führungsnut 60 relativ zu der Führungsnut 58 und infolge des Abstandes zwischen den Führungselemente 54, 56 erfährt das erste Türelement 38 die bereits oben erwähnte kombinierte Linear- und Schwenkbewegung. In gleicher Weise erfährt das zweite Türelement 38 eine horizontal gegenläufige Linear- und Schwenkbewegung. Jedes der zwei Türelemente 38a, 38b besitzt hier also an seinem unteren Ende zwei Drehpunkte, die das jeweilige Türelement gegen Querkräfte halten und führen.

In den bevorzugten Ausführungsbeispielen sind an den jeweiligen Enden der Führungsnuten 58, 60, 62 Durchgangslöcher 64 angeordnet, durch die Kleinteile, wie etwa Späne, die sich in den Führungsnuten abgelagert haben, herausfallen können, sobald sie von einem der Führungselemente 54, 56 bis zu dem Durchgangsloch 64 transportiert werden.

Wie man in Fig. 6 erkennen kann, sind die zweite und dritte Führungsnut 60, 62 in diesem Ausführungsbeispiel geradlinige Führungsnuten, so dass sowohl das erste Führungselement 54 als auch das zweite Führungselement 56 jedes Türelements 38a, 38b eine im Wesentlichen lineare Bahn durchläuft. Prinzipiell könnten die zweite und dritte Führungsnut 60, 62 in anderen Ausführungsbeispielen einen gebogenen/gekrümmten Verlauf haben.

Bei der Bezugsziffer 66 ist jeweils ein Verriegelungselement dargestellt, das im Bereich der Bodenplatte 50 angeordnet ist. Die Verriegelungselemente 66 blockieren das jeweilige zweite Führungselement 56, um ein unautorisiertes Aufschieben der Türelemente 38a, 38b durch Krafteinwirkung von außen zu verhindern. Die Verriegelungselemente 66 können als Weichen für das erste und/oder zweite Führungselement 54, 56 ausgebildet sein. Im dargestellten Ausführungsbeispiel sind die Verriegelungselemente 66 dadurch realisiert, dass die Führungsnut 60 bzw. 62 anfänglich, d.h. im Bereich der Führungsnut 58, ein kurzes Stück parallel zu der Führungsnut 58 verläuft. Das jeweilige zweite Führungselement 56 steht bei geschlossenen Türelementen 38a, 38b also in einem Nutabschnitt der jeweiligen Führungsnut 60 bzw. 62, der parallel zu der Führungsnut 58 verläuft. Dementsprechend blockieren die jeweiligen zweiten Führungselemente 56 die Türelemente 38a, 38b bei Druck von außen in Richtung Innenvolumen 40. Die Türelemente 38a, 38b müssen zum Öffnen zunächst ein kleines Stück rein horizontal entlang der Führungsnut 58 verschoben werden. Erst dann geht die Öffnungsbewegung in die kombinierte Linear- und Schwenkbewegung über. In anderen Ausführungsbeispielen kann das Verriegelungselement 66 ein aktiv verstellbares Verriegelungselement sein und/oder beinhalten, etwa ein verstellbarer Verriegelungsstift, der das Führungselement 54 und/oder 56 bei geschlossenem Türelement im Bereich der Führungsnut 58 und/oder 60,62 blockiert.

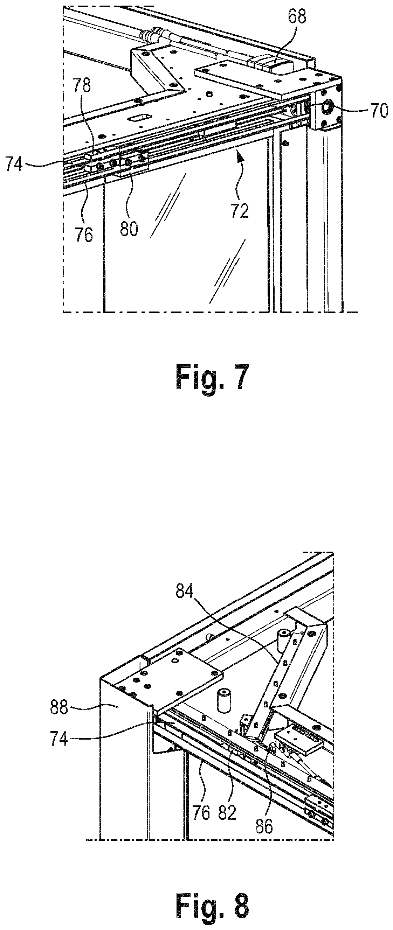

In bevorzugten Ausführungsbeispielen besitzt die Sicherheitsumhausung 30 einen gemeinsamen Antrieb für die zwei Türelemente 38a, 38b. Gemäß Fig. 7 ist ein (einzelner) elektrischer Motor vorgesehen, um ein Antriebsrad 70 anzutreiben. Der Antrieb beinhaltet hier einen umlaufenden Zahnriemen 72 mit einem ersten (hier oben liegenden) Trum und einem zweiten (hier unten liegenden) Trum 76. Am oberen Trum 74 ist ein erstes Riemenschloss 78 befestigt. Das erste Türelement 38a ist über das Riemenschloss 78 mit dem oberen Trum 74 des Antriebs gekoppelt. Ein zweites Riemenschloss 80 koppelt das zweite Türelement 38b mit dem unteren Trum 72. Wie man in Fig. 7 erkennen kann, verläuft der Zahnriemen 72 mit den Trumen 74, 76 hier parallel zu der Nut 58 bzw. parallel zu der Ebene der Türelemente im geschlossenen Zustand. Je nach Drehrichtung des Antriebsrads 70 öffnen oder schließen sich die Türelemente 38a, 38b horizontal gegenläufig, wie dies anhand der Figuren 2 bis 4 dargestellt ist.

Der Zahnriemen 72 bildet zusammen mit dem Antriebsrad 70 ein Umschlingungsgetriebe. Anstelle des Zahnriemens 72 könnte hier ein Keilriemen, eine Kette oder ein anderes Zugelement verwendet sein. Darüber hinaus könnten die Türelemente 38a, 38b prinzipiell auch mit einem Direktantrieb, etwa in Form eines elektrischen Linearmotors, geöffnet und geschlossen werden. In den bevorzugten Ausführungsbeispielen ist der Motor 68 ein Servomotor, der von einer Steuereinheit (hier nicht dargestellt) mit einem variablen Antriebsmoment so angesteuert wird, dass das Antriebsmoment zum Ende der Schließbewegung, d.h. bei Annäherung der Türelemente 38a, 38b an ihre jeweilige erste Endposition, abnimmt, um eine Verletzungsgefahr durch das Schließen der Türelemente zu reduzieren. Des Weiteren kann der Antrieb in weiteren Ausführungsbeispielen eine Begrenzung des Antriebsmoments besitzen, um eine Verletzungsgefahr beim Schließen der Türelemente zu reduzieren. Beispielsweise könnte der Antrieb einen Überlastschalter beinhalten, der die Bewegung der Türelemente 38a, 38b bei Überschreiten eines definierten Antriebsmoments stoppt oder sogar umkehrt. In weiteren Ausführungsbeispielen kann die Begrenzung des Antriebsmoments mit Hilfe einer Rutschkupplung (hier nicht dargestellt) realisiert sein.

Fig. 8 zeigt ein weiteres Detail der Sicherheitsumhausung, nämlich ein weiteres Führungselement 82, das am oberen Ende des Türelements 38a angeordnet ist, und eine Führung 84, die denselben Bewegungsablauf in das Türelement 38a einleitet, wie die Führungselemente 54, 56 und die Führungsnuten 58, 60. Das Führungselement 82 und die Führung 84 tragen das Eigengewicht des Türelements 38a. Mit anderen Worten ist das Türelement 38a hier an dem Führungselement 82 und der Führung 84 aufgehängt, so dass die Führungselemente 54, 56 nach Art eines Loslagers weitgehend frei von Axialkräften in den Führungsnuten 58, 60 laufen können. Gleiches gilt in dem bevorzugten Ausführungsbeispiel für das zweite Türelement 38b (hier nicht dargestellt).

Bei der Bezugsziffer 86 ist ein Endschalter angedeutet, mit dessen Hilfe die vollständig geschlossene Position des ersten Türelements 38a detektiert werden kann. In den bevorzugten Ausführungsbeispielen besitzt die Sicherheitsumhausung 30 zumindest einen weiteren Endschalter (hier nicht dargestellt) für das zweite Türelement 38b. Vorteilhaft sind die Endschalter hier elektrisch in Reihe geschaltet, um ein gemeinsames Freigabesignal zu erzeugen, das dazu verwendet werden kann, die Maschine nur dann in Betrieb zu nehmen, wenn die Türelemente 38a, 38b vollständig geschlossen sind.

Wie man in Fig. 8 weiter erkennen kann, besitzt die Sicherheitsumhausung 30 in dem hier dargestellten Ausführungsbeispiel eine Abdeckleiste 88, die einen verbleibenden Spalt zwischen der ersten Seitenwand 32 und dem ersten Türelement 38a in der vollständig geöffneten (zweiten) Endposition des Türelements 38a überdeckt (siehe auch Fig. 4). Mit anderen Worten "versteckt sich" das erste Türelement 38a in der zweiten Endposition hinter der Abdeckleiste 88. Bevorzugt ist die Abdeckleiste hier U- oder L-förmig ausgebildet, so dass sie die Schließkante 46 des ersten Türelements im geöffneten Zustand vollständig umgreift. In gleicher Weise ist hier im Bereich des zweiten Türelements 38b eine weitere Abdeckleiste 88 angeordnet (siehe Fig. 4).

In manchen Ausführungsbeispielen kann die Sicherheitsumhausung 30 eine oder mehrere Bürsten 90 besitzen, die an dem zumindest einen Türelement 38a befestigt sind und die auf der Bodenplatte 50 gleiten können. Alternativ oder ergänzend können Bürsten mit elektrisch leitfähigen Borsten am oberen Ende des zumindest einen Türelements 38a befestigt sein und beispielsweise an dem oberen Querträger 92 gleiten. Vorteilhaft ist der Querträger 92 dabei aus oder zumindest mit einem elektrisch leitfähigen Material hergestellt. Die Bürste 90 besitzt elektrisch leitfähige Borsten und ist elektrisch leitfähig mit einer elektrisch leitfähigen Beschichtung des zumindest einen Türelements 38a und/oder mit anderen elektrisch leitfähigen Materialien des zumindest einen Türelements 38a verbunden, um eine elektrostatische Aufladung des zumindest einen Türelements 38a durch die Öffnungs- und Schließbewegung zu verhindern. Mit Hilfe der Bürsten werden elektrostatische Ladungen gegen Masse abgeleitet. Gleiches gilt in den bevorzugten Ausführungsbeispielen für das zweite Türelement 38b.

In den bevorzugten Ausführungsbeispielen kommt die Sicherheitsumhausung 30 ohne Lichtschranken, Lichtgitter, Laserscanner oder andere berührungslos wirkende trennenden Schutzeinrichtungen aus. Abweichend hiervon kann die Sicherheitsumhausung 30 jedoch in Ergänzung zu den zwei Seitenwänden und dem zumindest einen Türelement berührungslos wirkende trennende Schutzeinrichtungen beinhalten, etwa im Bereich einer Öffnung in einer der Seitenwände 32, 34 (hier nicht dargestellt), die einer automatischen Materialzuführung in die Sicherheitszelle dient. Die Verwendung von rein mechanischen trennenden Schutzeinrichtungen besitzt gegenüber berührungslos wirkenden trennenden Schutzeinrichtungen den Vorteil, dass der Sicherheitsabstand der trennenden Schutzeinrichtung zu der Maschine sehr klein gewählt werden kann, weil ein direkter Zugriff in den Gefahrenbereich der Maschine durch die Türelemente verhindert ist.

Prinzipiell ist es bei einer Sicherheitsumhausung mit zwei Türelementen möglich, dass lediglich eines der zwei Türelemente die hier erläuterte kombinierte Linear- und Schwenkbewegung ausführt, während das zweite Türelement eine reine Linearbewegung oder eine reine Schwenkbewegung ausführt.

## Patentansprüche

1. Sicherheitsumhausung zum Absichern einer gefährlichen Maschine, insbesondere zum Absichern einer Presse (10), mit einer ersten und einer zweiten feststehenden Seitenwand (32, 34), die mit einem lateralen Abstand zu einander angeordnet sind und so ein Innenvolumen (40) aufspannen, und mit einem ersten beweglichen Türelement (38a) und einem zweiten beweglichen Türelement (38b), wobei die beiden Türelemente (38a, 38b) horizontal gegenläufig zueinander zwischen einer jeweiligen ersten und einer jeweiligen zweiten Endposition verschiebbar sind, wobei die beiden Türelemente (38a, 38b) in der jeweiligen ersten Endposition quer zu der ersten und der zweiten Seitenwand (32, 34) stehen und somit das Innenvolumen (40) zusammen mit der ersten und zweiten Seitenwand (32, 34) zu drei Seiten hin begrenzen, und wobei die beiden Türelemente (38a, 38b) in der jeweiligen zweiten Endposition in dem Innenvolumen (40) angeordnet sind und somit einen Zugang zu dem Innenvolumen (40) freigeben, wobei die beiden Türelemente (38a, 38b) jeweils eine kombinierte Linear- und Schwenkbewegung ausführen, wenn sie zwischen der jeweiligen ersten Endposition und der jeweiligen zweiten Endposition verschoben werden, wobei die kombinierte Linear- und Schwenkbewegung überwiegend horizontal verläuft, wobei die beiden Türelemente (38a, 38b) jeweils ein erstes und ein zweites Führungselement (54, 56) aufweisen, wobei sich das erste Führungselement (54) des ersten Türelements (38a) und das erste Führungselement (54') des zweiten Türelements (38b) jeweils entlang einer ersten linearen Bahn bewegen, und wobei sich das zweite Führungselement (56) des ersten Türelements (38a) zeitgleich entlang einer zweiten linearen Bahn bewegt und sich das zweite Führungselement des zweiten Türelements (38b) zeitgleich entlang einer dritten linearen Bahn bewegt, wenn die beiden Türelemente (38a, 38b) zwischen der jeweiligen ersten Endposition und der jeweiligen zweiten Endposition verschoben werden, wobei die zweite und die dritte Bahn jeweils schräg zu der ersten Bahn angeordnet sind, und wobei die Sicherheitsumhausung ferner eine Bodenplatte (50) mit einer ersten Führungsnut (58), die die erste lineare Bahn definiert, eine zweite Führungsnut (60), die die zweite lineare Bahn definiert, sowie eine dritte Führungsnut (62), die die dritte lineare Bahn definiert, aufweist, wobei die zweite Führungsnut (60) an der ersten Führungsnut (58) an einer Stelle beginnt, die der Position des zweiten Führungselements (56) des ersten Türelements (38a) bei geschlossenem ersten Türelement (38a) entspricht, und von hier aus schräg in Richtung der ersten Seitenwand (32) verläuft, wobei die zweite Führungsnut (60) von der ersten Führungsnut (58) an einem Punkt abzweigt, der sich zwischen einer Mitte der ersten Führungsnut (58) und einem ersten Ende der ersten Führungsnut (58) befindet, und wobei die dritte Führungsnut (62) an der ersten Führungsnut (58) an einer Stelle beginnt, die der Position des zweiten Führungselements (56) des zweiten Türelements (38b) bei geschlossenem zweiten Türelement (38b) entspricht, und spiegelbildlich zu der zweiten Führungsnut (60) schräg in Richtung der zweiten Seitenwand (34) verläuft, wobei die dritte Führungsnut (62) von der ersten Führungsnut (58) an einem zweiten Punkt abzweigt, der sich zwischen der Mitte der ersten Führungsnut (58) und einem zweiten Ende der ersten Führungsnut (58) befindet, so dass die drei Führungsnuten (58, 60, 62) in einer Draufsicht von oben drei winklig zueinander angeordnete Führungsbahnen bilden.

2. Sicherheitsumhausung nach Anspruch 1, **dadurch gekennzeichnet, dass** das erste Türelement (38a) in seiner zweiten Endposition parallel zu der ersten Seitenwand (32) angeordnet ist und das zweite Türelement (38b) in seiner zweiten Endposition parallel zu der zweiten Seitenwand (34) angeordnet ist.

3. Sicherheitsumhausung nach Anspruch 1 oder 2, **dadurch gekennzeichnet, dass** das erste Türelement (38a) ein drittes Führungselement (82) aufweist, an dem das erste Türelement (38a) aufgehängt ist.

4. Sicherheitsumhausung nach einem der Ansprüche 1 bis 3, **dadurch gekennzeichnet, dass** am Grund der drei Führungsnuten (58, 60, 62) Durchgangslöcher (64) angeordnet sind, die sich quer zu den Führungsnuten (58, 60, 62) durch die Bodenplatte (50) hindurch erstrecken.

5. Sicherheitsumhausung nach einem der Ansprüche 1 bis 4, **dadurch gekennzeichnet, dass** das erste Türelement (38a) eine Bürste (90) mit elektrisch leitfähigen Borsten besitzt, die auf der Bodenplatte (50) und/oder einem anderen feststehenden Umhausungsteil (92) gleiten.

6. Sicherheitsumhausung nach einem der Ansprüche 1 bis 5, **gekennzeichnet durch** zumindest eine Abdeckleiste (88), die quer zu der ersten Seitenwand (32) angeordnet ist und die eine verbleibende Lücke zwischen der ersten Seitenwand (32) und dem ersten Türelement (38a) in der zweiten Endposition überdeckt.

7. Sicherheitsumhausung nach einem der Ansprüche 1 bis 6, **gekennzeichnet durch** einen gemeinsamen Antrieb (68, 70, 72), der das erste und das zweite Türelement (38a, 38b) zwischen der ersten und der zweiten Endposition bewegt.

8. Sicherheitsumhausung nach Anspruch 7, **dadurch gekennzeichnet, dass** der gemeinsame Antrieb (68, 70, 72) ein Umschlingungsgetriebe mit einem ersten Trum (74) und einem gegenläufigen zweiten Trum (76) aufweist, wobei das erste Türelement (38a) mit dem ersten Trum (74) gekoppelt ist und wobei das zweite Türelement (38b) mit dem zweiten Trum (76) gekoppelt ist.

9. Sicherheitsumhausung nach Anspruch 7 oder 8, **dadurch gekennzeichnet, dass** der gemeinsame Antrieb (68, 70, 72) ein variables Antriebsmoment aufweist, welches bei Annäherung der Türelemente (38a, 38b) an die erste Endposition abnimmt.

10. Sicherheitsumhausung nach einem der Ansprüche 1 bis 9, **dadurch gekennzeichnet, dass** in der Bodenplatte (50) zwei Verriegelungselemente (66) angeordnet sind, die die zweiten Führungselemente (56) der beiden Türelemente (38a, 38b) blockieren, um ein unautorisiertes Aufschieben der beiden Türelemente (38a, 38b) durch Krafteinwirkung von außen zu verhindern, wobei die zweite Führungsnut (60) zur Bildung des ersten Verriegelungselements (66) in einem Anfangsabschnitt im Bereich der ersten Führungsnut (58) ein kurzes Stück parallel zu der ersten Führungsnut (58) verläuft, so dass das zweite Führungselement (56) des ersten Türelements (38a) bei geschlossenem ersten Türelement (38a) in dem parallel zu der ersten Führungsnut (58) verlaufenden Anfangsabschnitt der zweiten Führungsnut (60) steht, und die zweite Führungsnut (60) erst dann, also nach dem Anfangsabschnitt, in einen geradlinigen Abschnitt übergeht, der schräg zu der ersten Führungsnut (58) verläuft und die zweite lineare Bahn definiert, und wobei die dritte Führungsnut (62) zur Bildung des zweiten Verriegelungselements (66) in einem Anfangsabschnitt im Bereich der ersten Führungsnut (58) ein kurzes Stück parallel zu der ersten Führungsnut (58) verläuft, so dass das zweite Führungselement (56) des zweiten Türelements (38b) bei geschlossenem zweiten Türelement (38b) in dem parallel zu der ersten Führungsnut (58) verlaufenden Anfangsabschnitt der dritten Führungsnut (62) steht, und die dritte Führungsnut (62) erst dann, also nach dem Anfangsabschnitt, in einen geradlinigen Abschnitt übergeht, der schräg zu der ersten Führungsnut (58) verläuft und die dritte lineare Bahn definiert.

11. Presse mit einer Sicherheitsumhausung (30) nach einem der Ansprüche 1 bis 10.

## Claims

1. Safety enclosure for safeguarding a dangerous machine, in particular for safeguarding a press (10), having a first and a second fixed side wall (32, 34), which are arranged at a lateral distance from one another and in this way define an inner volume (40), and having a first movable door member (38a) and a second movable door member (38b), wherein the two door members (38a, 38b) are horizontally displaceable in opposite directions to one another between a respective first and a respective second end position, wherein the two door members (38a, 38b) in the respective first end position stand transversely to the first and second side walls (32, 34) and thus delimit the inner volume (40) together with the first and the second side walls (32, 34) on three sides, and wherein the two door members (38a, 38b) in the respective second end position are arranged in the inner volume (40) and thus open up access to the inner volume (40), wherein the two door members (38a, 38b) each perform a combined linear and pivotal movement when being displaced between the respective first end position and the respective second end position, wherein the combined linear and pivotal movement is predominantly horizontal, wherein the two door members (38a, 38b) each comprise a first and a second guide member (54, 56), wherein the first guide member (54) of the first door member (38a) and the first guide member (54') of the second door member (38b) each move along a first linear path, and wherein the second guide member (56) of the first door member (38a) simultaneously moves along a second linear path and the second guide member of the second door member (38b) simultaneously moves along a third linear path, when the two door members (38a, 38b) are displaced between the respective first end position and the respective second end position, wherein the second and third paths are each arranged obliquely to the first path, and wherein the safety enclosure further comprises a base plate (50) having a first guide groove (58) defining the first linear path, a second guide groove (60), defining the second linear path, and a third guide groove (62) defining the third linear path, wherein the second guide groove (60) starts at the first guide groove (58) at a position corresponding to the position of the second guide member (56) of the first door member (38a) when the first door member (38a) is closed and extends obliquely therefrom toward the first side wall (32), wherein the second guide groove (60) branches off from the first guide groove (58) at a point that is located between a center of the first guide groove (58) and a first end of the first guide groove (58), and wherein the third guide groove (62) starts at the first guide groove (58) at a position corresponding to the position of the second guide member (56) of the second door member (38b) when the second door member (38b) is closed, and extends in mirror-inverted to the second guide groove (60) obliquely towards the second side wall (34), wherein the third guide groove (62) branches off from the first guide groove (58) at a second point that is located between the center of the first guide groove (58) and a second end of the first guide groove (58), so that the three guide grooves (58, 60, 62) form three guide paths arranged at an angle to each other in a top view from above.

2. Safety enclosure according to claim 1, **characterized in that** the first door member (38a) in its second end position is arranged parallel to the first side wall (32) and the second door member (38b) in its second end position is arranged parallel to the second side wall (34).

3. Safety enclosure according to claim 1 or 2, **characterized in that** the first door member (38a) comprises a third guide member (82) at which the first door member (38a) is suspended.

4. Safety enclosure according to one of claims 1 to 3, **characterized in that** through-holes (64) are arranged at the bottom of the three guide grooves (58, 60, 62), which extend through the bottom plate (50) transversely to the guide grooves (58, 60, 62).

5. Safety enclosure according to one of claims 1 to 4, **characterized in that** the first door member (38a) comprises a brush (90) with electrically conductive bristles that are sliding on the bottom plate (50) and/or on another fixed enclosure part (92).

6. Safety enclosure according to one of claims 1 to 5, **characterized by** at least one cover strip (88) that is arranged transversely to the first side wall (32) and that covers a remaining gap between the first side wall (32) and the first door member (38a) in the second end position.

7. Safety enclosure according to one of claims 1 to 6, **characterized by** a common drive (68, 70, 72) that moves the first and second door members (38a, 38b) between the first and second end positions.

8. Safety enclosure according to claim 7, **characterized in that** the common drive (68, 70, 72) comprises a belt drive having a first strand (74) and a counter-rotating second strand (76), wherein the first door member (38a) is coupled to the first strand (74) and wherein the second door member (38b) is coupled to the second strand (76).

9. Safety enclosure according to claim 7 or 8, **characterized in that** the common drive (68, 70, 72) has a variable drive torque that decreases as the door members (38a, 38b) approach the first end position.

10. Safety enclosure according to one of claims 1 to 9, **characterized in that** two locking members (66) are arranged in the base plate (50), which block the second guide members (56) of the two door members (38a, 38b) in order to prevent unauthorized opening of the two door members (38a, 38b) by force from outside, wherein the second guide groove (60) runs in an initial section in the region of the first guide groove (58) a short distance parallel to the first guide groove (58) to form the first locking member (66), so that the second guide member (56) of the first door member (38a) is located in the initial section of the second guide groove (60) extending parallel to the first guide groove (58) when the first door member (38a) is closed, and the second guide groove (60) only then, i.e. after the initial section, changes into a rectilinear section which runs obliquely to the first guide groove (58) and defines the second linear path, and wherein the third guide groove (62) runs in an initial section in the region of the first guide groove (58) a short distance parallel to the first guide groove (58) to form the second locking member (66), so that the second guide member (56) of the second door member (38b) is located in the initial section of the third guide groove (62) extending parallel to the first guide groove (58) when the second door member (38b) is closed, and the third guide groove (62) only then, i.e. after the initial section, changes into a rectilinear section which runs obliquely to the first guide groove (58) and defines the third linear path.

11. Press with a safety enclosure (30) according to one of claims 1 to 10.

## Revendications

1. Enceinte de sécurité pour sécuriser une machine dangereuse, en particulier pour sécuriser une presse (10), comprenant une première et une deuxième paroi latérale fixe (32, 34) qui sont disposées à une distance latérale l'une de l'autre et constituent ainsi un volume intérieur (40), et comprenant un premier élément de porte mobile (38a) et un deuxième élément de porte mobile (38b), dans laquelle les deux éléments de porte (38a, 38b) sont déplaçables horizontalement en sens opposé entre une première position d'extrémité respective et une deuxième position d'extrémité respective, dans laquelle, dans la première position d'extrémité respective, les deux éléments de porte (38a, 38b) sont situés transversalement à la première et à la deuxième paroi latérale (32, 34) et délimitent ainsi le volume intérieur (40) conjointement avec la première et la deuxième paroi latérale (32, 34) sur trois côtés, et dans laquelle, dans la deuxième position d'extrémité respective, les deux éléments de porte (38a, 38b) sont disposés dans le volume intérieur (40) et donnent ainsi accès au volume intérieur (40), dans laquelle les deux éléments de porte (38a, 38b) effectuent respectivement un mouvement linéaire et pivotant combiné lorsqu'ils sont déplacés entre la première position d'extrémité respective et la deuxième position d'extrémité respective, le mouvement linéaire et pivotant combiné s'étendant horizontalement, dans laquelle les deux éléments de porte (38a, 38b) présentent respectivement un premier et un deuxième élément de guidage (54, 56), le premier élément de guidage (54) du premier élément de porte (38a) et le premier élément de guidage (54') du deuxième élément de porte (38b) se déplaçant respectivement le long d'une première trajectoire linéaire, et le deuxième élément de guidage (56) du premier élément de porte (38a) se déplaçant en même temps le long d'une deuxième trajectoire linéaire et le deuxième élément de guidage du deuxième élément de porte (38b) se déplaçant en même temps le long d'une troisième trajectoire linéaire lorsque les deux éléments de porte (38a, 38b) sont déplacés entre la première position d'extrémité respective et la deuxième position d'extrémité respective, dans laquelle la deuxième et la troisième trajectoire sont disposées respectivement en oblique par rapport à la première trajectoire, et dans laquelle l'enceinte de sécurité présente en outre une plaque de fond (50) dotée d'une première rainure de guidage (58) qui définit la première trajectoire linéaire, d'une deuxième rainure de guidage (60) qui définit la deuxième trajectoire linéaire, ainsi que d'une troisième rainure de guidage (62) qui définit la troisième trajectoire linéaire, dans laquelle la deuxième rainure de guidage (60) commence à la première rainure de guidage (58) à un endroit qui correspond à la position du deuxième élément de guidage (56) du premier élément de porte (38a) lorsque le premier élément de porte (38a) est fermé et s'étend à partir de cet endroit en oblique en direction de la première paroi latérale (32), dans laquelle la deuxième rainure de guidage (60) bifurque de la première rainure de guidage (58) en un point qui se trouve entre le centre de la première rainure de guidage (58) et une première extrémité de la première rainure de guidage (58), et dans laquelle la troisième rainure de guidage (62) commence à la première rainure de guidage (58) à un endroit qui correspond à la position du deuxième élément de guidage (56) du deuxième élément de porte (38b) lorsque le deuxième élément de porte est fermé (38b) et s'étend en miroir par rapport à la deuxième rainure de guidage (60) en oblique en direction de la deuxième paroi latérale (34), dans laquelle la troisième rainure de guidage (62) bifurque de la première rainure de guidage (58) en un deuxième point qui se trouve entre le centre de la première rainure de guidage (58) et une deuxième extrémité de la première rainure de guidage (58) de sorte que les trois rainures de guidage (58, 60, 62) constituent en vue de dessus trois trajectoires de guidage disposées angulairement les unes par rapport aux autres.

2. Enceinte de sécurité selon la revendication 1, **caractérisée en ce que** dans sa deuxième position d'extrémité, le premier élément de porte (38a) est disposé en parallèle à la première paroi latérale (32), et dans sa deuxième position d'extrémité, le deuxième élément de porte (38b) est disposé en parallèle à la deuxième paroi latérale (34).

3. Enceinte de sécurité selon la revendication 1 ou 2, **caractérisée en ce que** le premier élément de porte (38a) présente un troisième élément de guidage (82) auquel est suspendu le premier élément de porte (38a).

4. Enceinte de sécurité selon l'une quelconque des revendications 1 à 3, **caractérisée en ce que** sur le fond des trois rainures de guidage (58, 60, 62) des trous traversants (64) sont disposés qui s'étendent transversalement aux rainures de guidage (58, 60, 62) à travers la plaque de fond (50).

5. Enceinte de sécurité selon l'une quelconque des revendications 1 à 4, **caractérisée en ce que** le premier élément de porte (38a) possède une brosse (90) dotée de poils électriquement conducteurs qui coulissent sur la plaque de fond (50) et/ou une autre pièce d'enceinte fixe (92).

6. Enceinte de sécurité selon l'une quelconque des revendications 1 à 5, **caractérisée par** au moins un couvre-joint (88) qui est disposé transversalement à la première paroi latérale (32) et qui recouvre un interstice restant entre la première paroi latérale (32) et le premier élément de porte (38a) dans la deuxième position d'extrémité.

7. Enceinte de sécurité selon l'une quelconque des revendications 1 à 6, **caractérisée par** un entraînement commun (68, 70, 72) qui déplace le premier et le deuxième élément de porte (38a, 38b) entre la première et la deuxième position d'extrémité.

8. Enceinte de sécurité selon la revendication 7, **caractérisée en ce que** l'entraînement commun (68, 70, 72) présente une transmission à courroie munie d'un premier brin (74) et d'un deuxième brin opposé (76), le premier élément de porte (38a) étant couplé au premier brin (74) et le deuxième élément de porte (38b) étant couplé au deuxième brin (76).

9. Enceinte de sécurité selon la revendication 7 ou 8, **caractérisée en ce que** l'entraînement commun (68, 70, 72) présente un couple d'entraînement variable qui diminue lorsque les éléments de porte (38a, 38b) s'approchent de la première position d'extrémité.

10. Enceinte de sécurité selon l'une quelconque des revendications 1 à 9, **caractérisée en ce que** dans la plaque de fond (50) sont disposés deux éléments de verrouillage (66) qui bloquent les deuxièmes éléments de guidage (56) des deux éléments de porte (38a, 38b) pour empêcher une ouverture non autorisée des deux éléments de porte (38a, 38b) par l'action d'une force depuis l'extérieur, dans laquelle la deuxième rainure de guidage (60) s'étend pour former le premier élément de verrouillage (66) dans une partie initiale au niveau de la première rainure de guidage (58) brièvement en parallèle à la première rainure de guidage (58) de sorte que le deuxième élément de guidage (56) du premier élément de porte (38a), lorsque le premier élément de porte (38a) est fermé, se trouve dans la partie initiale de la deuxième rainure de guidage (60), s'étendant en parallèle à la première rainure de guidage (58), et la deuxième rainure de guidage (60) passe à une partie rectiligne qui s'étend en oblique par rapport à la première rainure de guidage (58) et définit la deuxième trajectoire linéaire, seulement après, c'est-à-dire après la partie initiale, et dans laquelle la troisième rainure de guidage (62) s'étend pour former le deuxième élément de verrouillage (66) dans une partie initiale au niveau de la première rainure de guidage (58) brièvement en parallèle à la première rainure de guidage (58) de sorte que le deuxième élément de guidage (56) du deuxième élément de porte (38b), lorsque le deuxième élément de porte (38b) est fermé, se trouve dans la partie initiale de la troisième rainure de guidage (62), s'étendant en parallèle à la première rainure de guidage (58), et la troisième rainure de guidage (62) passe à une partie rectiligne qui s'étend en oblique par rapport à la première rainure de guidage (58) et définit la troisième trajectoire linéaire, seulement après, c'est-à-dire après la partie initiale.

11. Presse, comprenant une enceinte de sécurité (30) selon l'une quelconque des revendications 1 à 10.
